# EUROPEAN PATENT APPLICATION

(11) **EP 0 633 414 A1**
(43) Date of publication of application: **11.01.1995**
(21) Application number: 93310285.7
(22) Date of filing: 20.12.1993
(51) Int. Cl.: F16K 1/30

(54) **Serial combination of two valves for two containers with liquid gas**

(30) Priority: 03.07.1993 ID 627893
(71) Applicant: PT. SUMBER CIPTA KARYA BAKTI, Kuningan, Jakarta Selatan (ID)
(72) Inventor: Soemopawiro, Soeroso, c/o J1, H.R. Rasuna S. Kav., Jakarta Selatan (ID); Sosrodimulyo, Rawono, c/o J1, H.R. Rasuna S. Kav., Jakarta Selatan (ID); Darmadi, Daryanto, c/o J1, H.R. Rasuna S. Kav., Jakarta Selatan (ID); Hikmawati, Emmy, c/o J1, H.R. Rasuna S. Kav., Jakarta Selatan (ID); Indrakoesoema, Bambang, c/o J1, H.R. Rasuna S.Kav., Jakarta Selatan (ID)
(74) Representative: Cheyne, John Robert Alexander Mackenzie

(57) **Abstract**

A valve comprising a flow passage having first and second valve elements (A, B), the first valve element (A) being engageable with the second valve element (B) during opening displacement of the first valve element (A), thereby to displace the second valve element (B) to an open position. The use of two valve elements (A, B) provides improved sealing over an extended period.

## Description

The present invention relates to valves.

Conventional gas valves which are used in industry or in more general applications are designed with practical, economical and safety considerations in mind, rather than durability considerations, which are of no less importance.

Research by both domestic and overseas researchers has found that conventional gas valves can be seriously affected by environmental factors. The prime function of a valve is the safe channelling of gas. As valves operate they are often subjected to dusty conditions. Eventually the valves are unable to close properly due to dust accumulation and they begin to leak.

A gas leak caused by the accumulations of dust between the valve seal and the valve seat inevitability causes complaints from the user of the valve and will eventually result in the valves getting a bad reputation for reliability.

According to the present invention, there is provided a valve comprising a flow passage having first and second valve elements, the first valve element being engageable with the second valve element during opening displacement of the first valve element, thereby to displace the second valve element to an open position.

In a valve using two valve elements, if one of the valve elements should fail to work, the second valve element will compensate. If the valve elements act independently when closing the valve and stopping the flow of gas, the sealing action of the valve is greatly improved.

Although valves with two valve elements are relatively expensive, the advantage of prevention of gas leakage is obviously extremely important. Thus a valve made according to the present invention will rapidly gain customer confidence, since such valves are more durable.

The valves may be made of brass and are preferably made by a forging process. A safety/over pressure device may be incorporated into the valves.

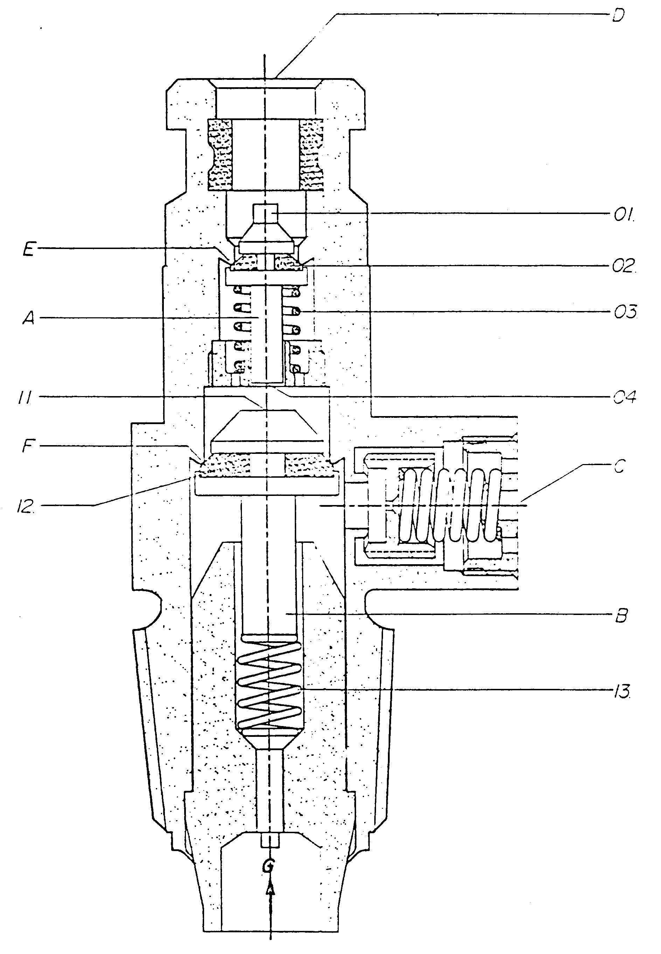

For a better understanding of the present invention and to show more clearly how it may be carried into effect, reference will now be made, by way of example, to the accompanying drawing, which is a longitudinal cross-sectional view of a gas valve.

The top of the gas valve (D) is adapted to fit a conventional regulator, commonly used by the gas industry, so that the gas valve according to the present invention can be used with existing equipment.

When a conventional regulator is installed on the gas valve and the gas is switched on, upper valve element (A) is pushed downwards and upper valve seal (02) is separated from the valve seat (E). Gas is permitted to flow through the valve when lower valve seal (12) is lifted from the valve seat (F) producing a flow passage between the valve seal (12) and the valve seat (F).

The gas volume passing through the regulator is controlled by the position of the valve elements (A and B) and the regulator itself. For example, when the regulator applies only slight pressure to the upper end (01) of the valve element (A), it only moves downwards a short distance, such that the lower end (04) of the upper valve element (A) does not engage the upper end (11) of the lower valve element (B). Thus, the lower valve seal (12) is not lifted away from the valve seat (F) thereby preventing the flow of gas from the container (G) to the regulator. In contrast, when the regulator pressure on the upper end (01) of the upper valve element (A) is higher, the lower end (04) of the upper valve element (A) exerts pressure on the upper end (11) of the lower valve element (B) providing a flow passage between the valve seat (F) and the lower valve seal (12) and allowing gas to flow from the container (G) to the regulator. This arrangement prevents unnecessary waste through excessive flow of gas from the container (G) and consequential excessive gas pressure downstream of the regulator.

When the regulator is removed, the valve seals (02) and (12) are pressed against the respective parts of the valve body under the action of the gas pressure and by respective springs (03 and 13), so that the flow of gas is prevented. If very high gas pressure occurs, the safety valve (C) works automatically to vent the system.

When a regulator is in position on a prior art single-valve element valve there is a marked possibility of a gas leak occurring, albeit slight, due to environmental influences. The potential leak problem is avoided in the present invention by using two valve elements, such that when the system is ready for use (the regulator being fitted) the regulator pressure on the upper valve element (A) is transmitted to the lower valve element (B), resulting in the upper opening between the valve seal (02) and the valve seat (E) and the lower opening between the valve seal (12) and the valve seat (F). The size of these openings is determined by the regulator setting and results in the desired flow rate of gas through the regulator.

However, when the regulator is not in place or is turned off, i.e. not being ready for use, the valve element (A) and the valve element (B) work independently under the action of the respective springs (03) and (13). Thus, the valve elements (A) and (B), work individually in mutual support and function jointly to prevent leakage. If the valve element (A) is not working properly, the valve element (B) will compensate and vice versa.

As such, the present invention provides practical gas valves (able to fit a conventional regulator), which are economical (leak-preventing and durable), safe (with two valve elements mutually compensating one another), and durable (the work load being shared by two valve elements).

It is to be understood that this invention is not limited to the specific embodiments described in the foregoing. Indeed, it is contemplated that the valve may be adapted, in size and shape for use in special applications.

## Claims

1. A valve comprising a flow passage having first and second valve elements, the first valve element being engageable with the second valve element during opening displacement of the first valve element, thereby to displace the second valve element to an open position.

2. A valve as claimed in claim 1, in which the first and second valve elements close independently.

3. A valve as claimed in claim 1 or 2, in which the first and second valve elements are of different sizes.

4. A valve as claimed in claim 3, in which the second valve element is larger than the first element.

5. A valve as claimed in claim 4, in which a given axial displacement of the first and second valve elements from respective valve seats results in a larger cross-sectional area for flow past the second valve element compared to that past the first valve element.

6. A method for flowing gas from a container to regulator comprising the installation of regulator such that the regulator axis pushes upper spindle and provides an opening between upper spindle rubber and valve body, and the lower spindle, by being pushed downward by the upper spindle, provides an opening between the lower spindle rubber and valve body, and the gas from the container flows to the regulator through the lower spindle opening and the upper spindle opening to the regulator, and that if the regulator is removed, because the upper spindle spring force shuts the opening between the upper spindle rubber and the valve body, and the lower spindle shuts the opening between the lower spindle rubber and the valve body resulting in the gas in the container being held by the lower spindle and the upper spindle.

7. A gas valve device for flowing or holding gas in accordance with claim 6 comprising head of valve, upper spindle unit, lower spindle unit and safety valve, characterised by the valve being in closed condition with each of the two spindle units working individually.

8. The upper and or the lower spindle unit in accordance with claim 7 comprising the spindle equipped with spindle rubber and spring for pushing the spindle upward.

9. The upper spindle and the lower spindle in accordance with claims 7 and 8, which form openings for gas flow when the upper spindle was pushed by the regulator installation.

10. The upper opening and the lower opening in accordance with claim 9 having predetermined profile width.
